# EUROPÄISCHE PATENTSCHRIFT

(11) **EP 1 578 635 B1**
(45) Veröffentlichungstag und Bekanntmachung des Hinweises auf die Patenterteilung: **17.03.2010**
(21) Anmeldenummer: 03785792.7
(22) Anmeldetag: 11.12.2003
(51) Int. Cl.: B60W 10/02, B60W 10/04

(54) **VERFAHREN UND VORRICHTUNG ZUR STEUERUNG EINER KUPPLUNG INNERHALB EINES KRAFTFAHRZEUGTRIEBSTRANGS**
METHOD AND DEVICE FOR CONTROLLING A CLUTCH WITHIN A DRIVE TRAIN OF A MOTOR VEHICLE
PROCEDE ET DISPOSITIF POUR COMMANDER UN EMBRAYAGE A L'INTERIEUR DE L'ENSEMBLE TRANSMISSION D'UN VEHICULE AUTOMOBILE

(30) Priorität: 23.12.2002 DE 10260838
(43) Veröffentlichungstag der Anmeldung: 28.09.2005
(73) Patentinhaber: Volkswagen Aktiengesellschaft, 38436 Wolfsburg (DE)
(72) Erfinder: SCHWENGER, Andreas, 38446 Wolfsburg (DE)
(74) Vertreter: Banzer, Hans-Jörg
(86) Internationale Anmeldenummer: PCT/EP2003/014076
(87) Internationale Veröffentlichungsnummer: WO 2004/058533

(56) Entgegenhaltungen:
- DE-A- 3 121 749
- DE-A- 3 937 976

## Beschreibung

Die vorliegende Erfindung betrifft ein Verfahren bzw. eine Vorrichtung zur Steuerung zweier Regelgrößen in einem Antriebsstrang eines Kraftfahrzeugs.

Im Kraftfahrzeugbereich werden beispielsweise zunehmend Handschaltgetriebe durch automatische Getriebe bzw. automatisierte Getriebe ersetzt. Die entsprechende Ansteuerung der Kupplung erfolgt in aller Regel über einen Getrieberechner bzw. eine Steuervorrichtung. Dazu wird mit einem Stellglied die aktuelle Kupplungskapazität einer steuerbaren Kupplung zeitabhängig eingestellt. Ziel bisheriger bekannter Kupplungsansteuerungen war es, entweder Differenz- oder Absolutdrehzahlverläufen zu folgen. Um eine gute Regelgüte zu erlangen, ist es notwendig, dass eine definierte Ansteuerung der Kupplung auch eine definierte Änderung der Kupplungskapazität zur Folge hat. Dies bedeutet im Umkehrschluss, dass bei konstanter Ansteuerung der Kupplung sich dessen Kapazität nicht ändern darf. Daher werden an die Fertigungstoleranzen des Stellglieds und der Kupplung große Anforderungen gestellt. Werden diese nicht eingehalten oder durch die Alterung der Bauteile nicht mehr erfüllt, können während der Schlupfphase der Kupplung unerwünschte Momentenänderungen auftreten und unter Umständen Schwingungen im Antriebsstrang angeregt werden.

Die EP 1 258 386 A2 offenbart ein Verfahren zur Durchführung eines Anfahrvorgangs bei einem Antriebssystem. Um einen komfortablen Anfahrvorgang zu erreichen, wird zuerst ein Fahreranforderungsmoment ermittelt, welches anschließend verringert als Vorgabemoment zur Ansteuerung des Antriebsmotors verwendet wird. Anschließend wird eine Kupplungsanordnung eingekuppelt und danach das Vorgabemoment wieder bis auf den ursprünglich vom Fahrer angeforderten Wert erhöht. Nachteiligerweise werden dabei jedoch Schwingungen im Antriebsstrang nicht erkannt und auch nicht ausgeregelt.

Weiterhin ist durch die EP 1 078 805 A1 eine Steuerung für den Antriebsstrang beim Anfahren eines Kraftfahrzeugs beschrieben, wobei mittels einer Erkennungsschaltung die jeweilige Fahrsituation des Fahrzeugs und die Fahrercharakteristik ermittelt werden und bei Anfahren des Kraftfahrzeugs eine Steuereinrichtung für die Kupplung an die ermittelte Fahrsituation und/oder Fahrercharakteristik adaptiv angepasst wird. Auch hier findet eine Erkennung von Schwingungen im Antriebsstrang und deren Ausregelung nachteiligerweise nicht statt.

Die DE 3937976 A1 offenbart eine Regeleinrichtung nach dem Oberbegriff des Anspruchs 11, bei welcher ein erster Regelkreis vorhanden ist, der aus dem die Differenzdrehzahl als Regelgröße ermittelnden Messwertgeber und aus dem aus Betriebsparametern der Brennkraftmaschine einen ersten Soll-Wert bildenden ersten Soll-Wert-Geber besteht. Diesem ersten Regelkreis ist ein zweiter Regelkreis überlagert, zu dem die die Drehgeschwindigkeitsdifferenzen ermittelnde Sensoreinrichtung und der zweite Soll-Wert-Geber gehören. Der zweite Soll-Wert-Geber kann den Soll-Wert des ersten Soll-Wert-Gebers adaptiv beeinflussen oder ummittelbar auf den Summierer im Sinne einer Erhöhung des Soll-Wertes wirken.

Der vorliegenden Erfindung liegt die Aufgabe zu Grunde, ein Verfahren bzw. eine Vorrichtung zur Regelung zweier Regelgrößen in einem Kraftfahrzeug, insbesondere Regelgrößen eines Antriebsstrangs des Kraftfahrzeugs, wobei die beiden Regelgrößen im Wesentlichen entkoppelt voneinander durch geringen Aufwand an Stellgliedern geregelt werden können.

Erfindungsgemäß wird diese Aufgabe durch ein Verfahren mit den Merkmalen des Anspruchs 1 bzw. eine Vorrichtung mit den Merkmalen des Anspruchs 11 gelöst. Die Unteransprüche definieren jeweils bevorzugte und vorteilhafte Ausführungsformen der vorliegenden Erfindung.

Erfindungsgemäß wird eine erste Regelgröße von einem ersten Regelkreis mit einem ersten Regelblock und eine zweite Regelgröße von einem zweiten Regelkreis mit einem zweiten Regelblock geregelt, wobei die beiden Regelkreise in voneinander unterschiedlichen Frequenzbereichen wirksam sind. Auf diese Weise können mit einem sehr geringen Aufwand auf der Stellgliedseite beide Regelgrößen geregelt werden.

Im Fall der Regelung von Drehzahlschwingungen in einem Antriebsstrang werden zunächst Drehzahlschwingungen in dem Teil des Antriebsstrangs auf der Abtriebsseite der Kupplung ermittelt und durch Stelleingriff auf die Kupplung mittels einer Schwingungsregelung verringert. Durch den Eingriff der Schwindungsregelung bei der Kupplung kann das auf den Antriebsstrang auf der Abtriebsseite der Kupplung wirkende Drehmoment besonders schnell und besonders stark verändert werden, so dass die Regelung wirkungsvoll und schnell auf den zu regelnden Antriebsstrang einwirken kann.

Die Schwingungsregelung kann auch auf eine zusätzliche Kupplung wirken, die in dem Antriebsstrang vorhanden ist. Eine derartige zusätzliche Kupplung kann insbesondere in einem Automatikgetriebe vorhanden sein und die Verbindung zwischen dem Motor und einem Zweig herstellen können, der ein Drehmoment in den Zweig einspeisen kann, der den Hauptanteil des Drehmoments überträgt. Dabei kann auch vorgesehen sein, dass die Schwingungsregelung bei einer Hauptkupplung und einer zusätzlichen Kupplung jeweils auf die Kupplung wirkt, die sich gerade im Schlupf befindet. Das Umschalten der Einwirkung auf die beiden Kupplungen kann abrupt sein, so dass eine Einwirkung auf eine Kupplung eine Einwirkung auf die andere ausschließt, oder einen fließenden Übergang bilden, bei dem in einem Zwischenzustand beide Kupplungen mit einem Stellsignal beaufschlagt werden, wobei auch vorgesehen sein kann, dass das Stellsignal für eine erste Kupplung von einem Regelkreis erzeugt wird und das Stellsignal für die andere Kupplung aus dem Stellsignal für die erste Kupplung berechnet wird.

Anstelle der zusätzlichen Kupplung kann auch ein Elektroantrieb in Abhängigkeit eines von der Regelung erzeugten Stellsignals angesteuert werden, der ähnlich wie die zusätzliche Kupplung ein zusätzliches Drehmoment auf den Antriebsstrang an der Abtriebsseite der Hauptkupplung aufbringen kann. Allgemein kann anstelle der zusätzlichen Kupplung ein anderes Stellglied verwendet werden, das das zusätzliche Einbringen eines Drehmoments auf der Abtriebsseite der Kupplung ermöglicht, wie beispielsweise Synchronisiereinrichtungen in einem Getriebe. Für die Ansteuerung der Alternativen zu einer zusätzlichen Kupplung gilt das Gleiche wie für die Ansteuerung der zusätzlichen Kupplung.

Das Einwirken auf eine zusätzliche Kupplung ist besonders in den Situationen sinnvoll, in denen eine Hauptkupplung geschlossen ist.

Vorteilhafterweise ist die Schwingungsregelung wenigstens einer weiteren Regelung zugeordnet, welche ebenso mittels Stelleingriff auf die Kupplung einwirkt. Die weitere Regelung kann beispielsweise eine Regelung zur Führung der Motordrehzahl umfassen. Weiterhin kann die Kupplung von einer Regelung zur Führung des von der Kupplung übertragenen Drehmoments beaufschlagt werden.

Wenn mehrere Regelkreise auf die Kupplung einwirken, wird die Schwingungsregelung vorteilhafterweise so eingerichtet, dass sie den anderen Regelkreisen derart überlagert ist, dass diese wenig oder gar nicht beeinflusst werden.

Um die Schwingungsregelung ohne Beeinflussung anderer Regelkreise implementieren zu können, kann vorgesehen sein, dass der Frequenzbereich im Schwingungsregelkreis bandbegrenzt ist. Dazu kann grundsätzlich an beliebiger Stelle im Schwingungsregelkreis eine Frequenzbandbegrenzung der übertragenen Signale vorgenommen werden. Dies kann beispielsweise bei der Berechnung der Stelleingriffe bzw. eines Stellsignals sein. Weiterhin kann auch bei der Ermittlung der Ist-Größe bzw. der durch Regelung zu verringernden Drehzahlschwingungen eine Bandbegrenzung vorgenommen werden.

Vorzugsweise wird der Schwingungsregelkreis derart bandbegrenzt, dass er nicht in derartigen Frequenzbereichen wirksam ist, in denen bereits andere Regelungen wirken, denen der Schwingungsregelkreis zugeordnet ist. Dabei kann entweder ausgenutzt werden, dass die anderen Regelkreise von ihrer Natur her bandbegrenzt sind oder können die anderen Regelkreise gezielt bandbegrenzt werden. Da die Drehzahlschwingungen im Vergleich zu den anderen Stelleingriffen in der Regel höherfrequent sind, werden die Frequenzbereiche vorteilhafterweise derart aufgeteilt, dass die Schwingungsregelung in einem Frequenzbereich wirkt, der oberhalb der Frequenzbereiche liegt, in denen der wenigstens eine zugeordnete weitere Regelkreis wirkt.

Zum Ermitteln der Drehzahlschwingungen auf der Abtriebsseite der Kupplung bieten sich verschiedene Möglichkeiten an. Zum Einen kann mit einem einfachen Filter, das eine Hochpasscharakteristik besitzt, ein Maß für Drehzahlschwingungen ermittelt werden. Dies setzt jedoch voraus, dass die unerwünschten Drehzahlschwingungen in einem Frequenzbereich auftreten, der mit ausreichendem Abstand oberhalb der Frequenzbereiche liegt, in denen erwünschte Veränderungen der Drehzahl liegen.

Vorteilhafterweise wird daher zur Unterscheidung von unerwünschten Drehzahlschwingungen und erwünschten Drehzahlveränderungen ein Beobachter eingeführt, der ein Modell zumindest eines Teils des Antriebsstrangs umfasst. Das Modell im Beobachter beschreibt dabei das ideale Verhalten des Antriebsstrangs ohne die bei einem realen Antriebsstrang vorhandenen Fehler, die zu den unerwünschten Drehzahlschwingungen führen können. Das Modell im Beobachter wird nun der realen Entsprechung im Antriebsstrang nachgeführt, indem es den gleichen Einwirkungen ausgesetzt wird. Dazu wird es mit den auf die reale Entsprechung im Antriebsstrang wirkenden Stelleingriffen und beeinflussenden Umgebungseinflüssen beaufschlagt. Dies bewirkt, dass sich das Modell so verhält wie der nachgestellte Teil des Antriebsstrangs, wobei das Modell jedoch die Verhaltensmuster nicht zeigt, die beim realen Antriebsstrang auf Fehler oder allgemeine Unzulänglichkeiten zurückgehen, wie beispielsweise Abnutzung, überschrittene Toleranzgrenzen usw., die im Modell nicht berücksichtigt sind. Durch den Vergleich des Modells im Beobachter und des Verhaltens der realen Strecke bzw. des nachmodulierten Teils des Antriebsstrangs können somit die erwünschten Verhaltensteile, die sich auf Grund der üblichen Regelung ergeben, von den unerwünschten Verhaltensteilen getrennt werden, die sich auf Grund von Fehlern oder nachteiligen Veränderungen im Antriebsstrang ergeben haben. Gleiches gilt selbstverständlich auch für die unerwünschten Drehzahlschwingungen. In diesem Fall können auch unerwünschte Drehzahlschwingungen erkannt und ausgeregelt werden, die in den gleichen Frequenzbereich fallen wie Drehzahländerungen, die von einer nebengeordneten Regelung tatsächlich erwünscht waren.

Die Erfindung wird nachfolgend anhand eines bevorzugten Ausführungsbeispiels unter Bezugnahme auf die beigefügten Zeichnungen näher erläutert.
Figur 1 zeigt schematisch einen Antriebsstrang eines Kraftfahrzeugs,
Figur 2 zeigt schematisch vier innerhalb des Antriebsstrangs auftretende Drehzahlverläufe,
Figur 3 zeigt ein Blockdiagramm einer Regelung zur Verringerung von Drehzahlschwingungen innerhalb des Antriebsstrangs gemäß dem Ausführungsbeispiel der vorliegenden Erfindung mit zugeordneter Regelung der Motordrehzahl, und
Figur 4 zeigt die Frequenzbereiche, in denen die beiden Regelungen gemäß Figur 3 wirksam sind.

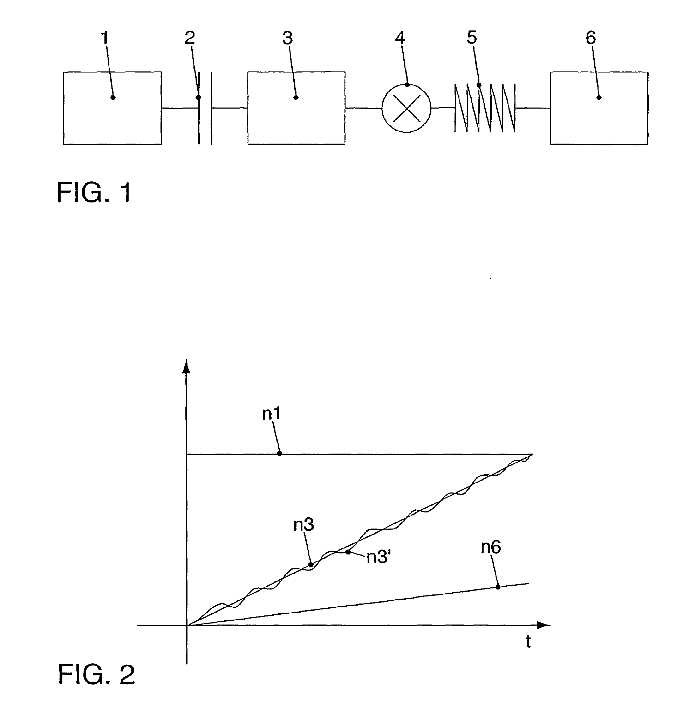

In Figur 1 ist schematisch der Antriebsstrang eines Kraftfahrzeugs dargestellt. Dabei ist in Figur 1 die Strecke des Antriebsstrangs dargestellt, die einen Motorteil 1 umfasst, der Drehenergie an eine steuerbare Kupplung 2 abgibt, welche auf der Abtriebsseite in Drehrichtung einen Abtriebsteil 3 antreibt. Der Abtriebsteil 3 wirkt wiederum auf ein Getriebe 4, welches über ein federelastisches Verbindungselement 5 mit einem Traktionsteil 6 verbunden ist, welcher schließlich den Kontakt zur Außenwelt des Kraftfahrzeugs herstellt. Insbesondere wenn bei der Kupplung 2 ein Schlupf auftritt, können auf Grund des federelastischen Elements 5 auf der Abtriebsseite der Kupplung 2 unerwünschte Drehzahlschwingungen auftreten. Die Frequenz und das Ausmaß richten sich insbesondere nach der Kupplungskapazität der Kupplung 2, dem Trägheitsmoment auf der Abtriebsseite 3, dem Übersetzungsverhältnis des Getriebes 4 und der Federsteifigkeit des Verbindungselements 5.

In Figur 2 ist die Situation beim Anfahren dargestellt. Dabei ist in dem dargestellten Diagramm auf der horizontalen Achse nach rechts die Zeit t und nach oben auf der senkrechten Achse die Drehzahl n aufgetragen. Im dargestellten Diagramm sind vier Drehzahlverläufe dargestellte. Der Drehzahlverlauf n1 beschreibt den Verlauf der Drehzahl auf der Motorseite 1 und der Drehzahlverlauf n6 beschreibt den Verlauf der Drehzahl auf der Traktionsseite 6. Die Drehzahlverläufe n3 und n3' beschreiben die Drehzahl auf der Abtriebsseite 3, wobei der Verlauf n3' den Drehzahlverlauf bei einem Anfahrvorgang nach dem Stand der Technik beschreibt. Der Verlauf n3' weist eine gewisse Welligkeit auf, die von einer dem linearen Drehzahlanstieg überlagerten Drehzahlschwingung herrührt. Ziel der vorliegenden Erfindung ist es, diese Welligkeit auf der Abtriebsseite der Kupplung 2 zu verringern, so dass sich der ideale Verlauf n3 für den Drehzahlverlauf auf der Abtriebsseite 3 der Kupplung 2 ergibt.

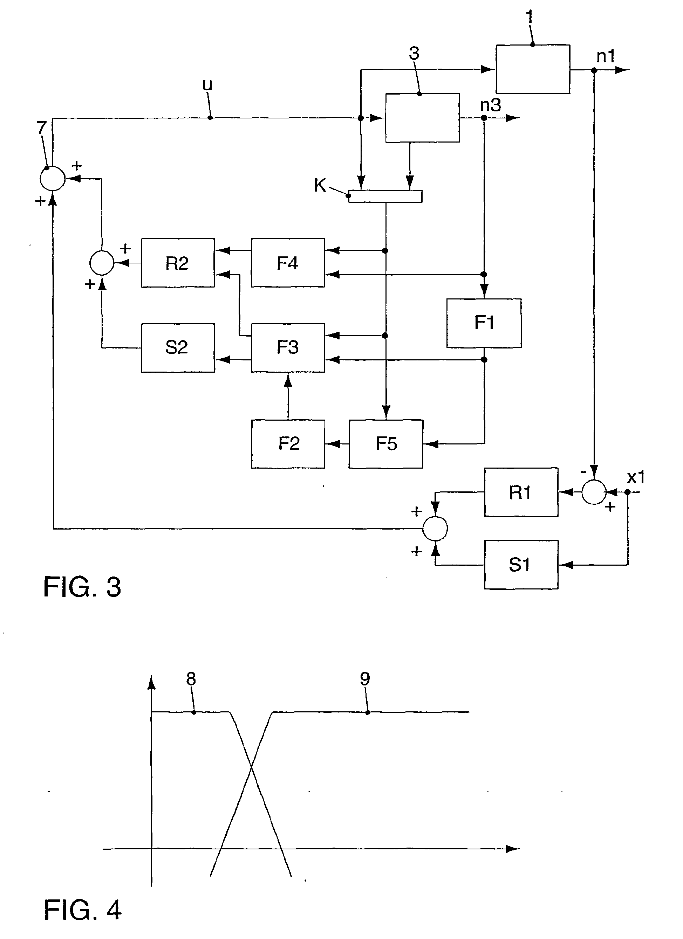

Dazu wird ein Regelungsverfahren eingesetzt, das schematisch in Figur 3 dargestellt ist.

Das in Figur 3 dargestellte Blockschaltdiagramm umfasst zwei Regelkreise, einen inneren Regelkreis und einen äußeren Regelkreis. Beide Regelkreise erzeugen in Summe ein Stellsignal u für die Kupplung 2, wobei das Stellsignal u sich auf das Verhalten sowohl der Motorseite 1 als auch der Abtriebsseite 3 auswirkt. Diese beiden Streckenabschnitte 1 und 3 liefern am Ausgang in dem in Figur 3 dargestellten Diagramm die beiden Drehzahlen n1 als Drehzahl der Motorseite 1 und n3 als Drehzahl der Abtriebsseite 3.

Der äußere Regelkreis führt die Motordrehzahl n1 und umfasst einen ersten Regelblock R1, dessen Eingang mit der Differenz zwischen einer Motordrehzahlführungsgröße bzw. Motor-Soll-Drehzahl x1 und der Motor-Ist-Drehzahl n1 beaufschlagt wird. Das Ausgangssignal des ersten Regelblocks R1 addiert sich zu dem Ausgang einer ersten Störgrößenaufschaltung S1, deren Eingang ebenfalls von der Motor-Soll-Drehzahl S1 beaufschlagt wird. Die Summe der Ausgangssignale des ersten Regelblocks R1 und der ersten Störgrößenaufschaltung S1 wird auf ein Summierglied 7 gegeben, in dem das Ausgangssignal des zweiten inneren Regelkreises aufsummiert wird und an dessen Ausgang die Stellgröße u für die Kupplung 2 anliegt.

Anschließend wird der innere Regelkreis beschrieben, der ebenfalls auf einen positiven Eingang des Summierglieds 7 und somit mittels des vom Summierglied 7 erzeugten Stellsignals u ebenfalls auf die Kupplung 2 wirkt.

Kern des inneren Regelkreises bilden die beiden Filter F3 und F4, wobei das Filter F3 ein Modell der realen Strecke 3 beinhaltet, das das Verhalten der Abtriebsseite 3 bei idealer Ausführung aller beteiligten Komponenten möglichst gut nachbildet. Das Filter F4 beinhaltet ein Modell einer idealisierten Strecke 3, das das Verhalten der Abtriebsseite 3 unter der Annahme nachbildet, dass die Strecke 3 sich auf eine für das Verhalten des Antriebstrangs vorteilhaftere Weise verhält. Dies bedeutet insbesondere, dass das Modell der idealisierten Strecke 3 in Filter F4 weniger zu Schwingungen neigt bzw. eine höhere Dämpfung aufweist als das Modell in Filter F3.

Das Filter F4 wird sowohl von dem Drehzahlsignal n3 der Abtriebseite 3 als auch dem Ausgangssignal eines Kombinierglieds K beaufschlagt, das eingangsseitig mit dem Stellsignal u und Eigenschaftsgrößen der Strecke 3 beaufschlagt wird. Das Filter F4 berechnet aus den Eingangsgrößen mit Hilfe des Modells der idealisierten Strecke 3 laufend Soll-Werte für die Drehzahl n3 der Strecke 3, wobei diese Soll-Werte die Werte darstellen, die die idealisierte Strecke unter den herrschenden Bedingungen liefern würde.

Das Filter F3 wird mit dem Ausgangssignal des Kombinierglieds K und dem mittels eines Hochpassfilter F1 gefilterten Drehzahlsignal n3 der Abtriebsseite 3 beaufschlagt. Das Hochpassfilter F1 ist optional und kann auch weggelassen werden. An der Ausgangsseite liefert das Filter F3 zwei Signale. Zum einen liefert das Filter F3 an einem zweiten Regelblock R2 laufend Ist-Werte der Drehzahl n3 der Strecke 3, wobei diese Ist-Werte die Werte darstellen, die die modellierte Strecke 3 liefert bzw. die Strecke 3 bei idealer Ausführung liefern würde. Der zweite Regelblock R2 berechnet anhand der Ausgangssignale der Filter F3 und F4 die Differenz für die Drehzahl n3 und erzeugt davon abhängig ein Ausgangssignal, welches additiv auf das Addierglied 7 und somit auf das Stellglied u wirkt. Der zweite Regelblock R2 regelt somit nicht die Drehzahl n3 der Strecke 3, sondern das Verhalten des Modells der Strecke im Filter F3 dem Verhalten des Modells der idealisierten Strecke im Filter F4 nach und ändert somit das Verhalten der Strecke 3 derart, dass diese sich wie die im Filter F4 modellierte idealisierte Strecke verhält. Auf diese Weise kann durch Eingriff bei der Kupplung 2 die Strecke 3 wirkungsvoll gedämpft werden. Da das Modell im Filter F4 stärker gedämpft ist, wirkt sich der innere Regelkreis im Wesentlichen in einem höherfrequenten Frequenzbereich aus.

Das Modell im Filter F3 ist grundsätzlich seiner Art nach vorgegeben, wobei in dem Modell veränderliche Parameter vorgesehen sind. Diese Parameter werden von dem Filter F5 erzeugt, das ebenfalls ein Modell der Strecke 3 beinhaltet und von dem Ausgangssignal des Kombinierglieds K und dem mittels des Hochpassfilter F1 gefilterten Drehzahlsignal n3 beaufschlagt wird. Das Filter F5 berechnet anhand der Eingangssignale die Parameter für das Modell im Filter F3 derart, dass das Modell im Filter F3 dem Grundsatz nach möglichst gut mit der realen Strecke 3 übereinstimmt. Die vom Filter F5 gelieferten Parameter durchlaufen vorher noch das Filter F2, bevor sie zum Filter F3 gelangen.

Das Filter F3 liefert neben den Ist-Werten für den zweiten Regelblock R2 auch das Eingangssignal für eine zweite Störgrößenaufschaltung S2, welches die Anteile im Drehzahlsignal n3 beschreibt, die sich aufgrund der Differenz zwischen dem Verhalten der realen Strecke 3 und dem Modell der Strecke 3 im Filter F3 ergeben. Die Störgrößenaufschaltung S2 liefert ein Ausgangssignal, das wie das Ausgangssignal des zweiten Regelblocks R2 additiv auf das Summierglied 7 und somit auf das Stellsignal u wirkt. Auf diese Weise wirkt die zweite Störgrößenaufschaltung S2 Anteilen im Drehzahlsignal n3 entgegen, die sich aufgrund der Unterschiede zwischen der realen Strecke 3 und dem Modell im Filter F3 ergeben.

Die beiden Regelkreise sind dabei so ausgelegt, dass sie in voneinander im Wesentlichen getrennten Frequenzbereichen wirken. Dies bedeutet, dass der innere Regelkreis sich nicht nachteilig auf die Regelung der Motorsolldrehzahl x1 auswirkt, sondern im Wesentlichen nur die unerwünschten Drehzahlschwingungen auf der Abtriebsseite 3 der Kupplung 2 reduziert bzw. ausregelt.

In Figur 4 ist das Verhältnis der beiden Frequenzbereiche zueinander dargestellt, wobei in dem Diagramm nach rechts horizontal die Frequenz f und senkrecht nach oben das Verhältnis des in dem einzelnen Regelkreis berechneten Stellgrößenanteils zu der Beaufschlagung am Eingang dargestellt. Dabei ist zu erkennen, dass der Bereich 8 im Niederfrequenten liegt und zu höheren Frequenzen hin nach oben bandbegrenzt ist, wohingegen der Bereich 9 im oberen Frequenzbereich liegt und zu tieferen Frequenzen bandbegrenzt ist. Der erste Bereich 8 ist der Wirkungsbereich des ersten äußeren Regelkreises und der zweite Bereich 9 ist der Frequenzbereich, in dem der innere zweite Regelkreis zur Beseitigung der unerwünschten Drehzahlschwingungen liegt.

### BEZUGSZEICHENLISTE

- 1: Motorseite
- 2: Kupplung
- 3: Abtriebsseite
- 4: Getriebe
- 5: federelastisches Verbindungselement
- 6: Traktionsseite
- n: Drehzahl
- n1: Motordrehzahl
- n3, n3': Drehzahl auf der Abtriebsseite
- n6: Drehzahl auf der Traktionsseite
- 7: Summierglied
- 8: Frequenzbereich des Motordrehzahlregelkreises
- 9: Frequenzbereich des Drehzahlschwingungsregelkreises
- K: Kombinierglied
- R1: erster Regelblock
- R2: zweiter Regelblock
- S1: erste Störgrößenaufschaltung
- S2: zweite Störgrößenaufschaltung
- F1, F2, F3, F4, F5: Filter
- x1: Motordrehzahlführungsgröße

## Patentansprüche

1. Verfahren zur Regelung einer ersten Regelgröße und einer zweiten Regelgröße in einem Antriebsstrang (1-6) eines Kraftfahrzeugs, wobei für die erste Regelgröße ein erster eigener Regelkreis und für die zweite Regelgröße ein zweiter eigener Regelkreis vorgesehen ist,
**dadurch gekennzeichnet, dass** der erste Regelkreis einen ersten Regelblock (R1) zum Regeln der ersten Regelgröße und der zweite Regelkreis einen zweiten Regelblock (R2) zum Regeln der zweiten Regelgröße umfasst, wobei die beiden Regelkreise derart eingerichtet sind, dass beide Regelkreise überlagert auf eine Kupplung (2) des Antriebsstrangs wirken und ihr Übertragungsverhalten in Bezug auf die Frequenz jeweils derart unterschiedlich ist, dass sie in voneinander im Wesentlichen getrennten Frequenzbereichen wirken.

2. Verfahren nach Anspruch 1, **dadurch gekennzeichnet, dass** die beiden Regelkreise in jeweils einem von zwei Frequenzbereichen wirksam sind, die sich voneinander unterscheiden.

3. Verfahren nach Anspruch 1 oder 2, **dadurch gekennzeichnet, dass** die beiden Regelgrößen Größen zur Steuerung des Antriebsstrangs (1-6) des Kraftfahrzeugs mit einem Motor (1) und wenigstens einer steuerbaren Kupplung (2) als Stellglied sind und eine Regelgröße ein Maß für Drehzahlschwingungen eines Abschnitts des Antriebsstrangs an der Abtriebsseite der Kupplung (2) ist und derart geregelt wird, dass Drehzahlschwingungen mittels einer Schwingungsregelung durch Stelleingriff auf die Kupplung verringert werden.

4. Verfahren nach einem der vorhergehenden Ansprüche, **dadurch gekennzeichnet, dass** ein Regelkreis eine Regelung zur Führung der Motordrehzahl (n1) umfasst.

5. Verfahren nach einem der vorhergehenden Ansprüche, **dadurch gekennzeichnet, dass** ein Regelkreis eine Regelung zur Führung des von der Kupplung (2) übertragenen Drehmoments umfasst.

6. Verfahren nach einem der vorhergehenden Ansprüche, **dadurch gekennzeichnet, dass** zur Erreichung eines in Bezug auf die Frequenz unterschiedlichen Übertragungsverhaltens der Regelkreise das Frequenzspektrum von Signalen in einem Regelkreis mittels einer Hochpassfilterung oder einer Bandpassfilterung begrenzt werden.

7. Verfahren nach Anspruch 6, **dadurch gekennzeichnet, dass** ein Regelkreis der Verringerung von Drehzahlschwingungen in einem Abschnitt des Antriebsstrangs eines Kraftfahrzeugs auf der Abtriebsseite (3) der Kupplung (2) dient und die Begrenzung des Frequenzspektrums bei der Ermittlung eines Maßes für Drehzahlschwingungen und/oder bei der Erzeugung eines Stelleingriffs für die Kupplung (2) durchgeführt wird.

8. Verfahren nach einem der vorhergehenden Ansprüche, **dadurch gekennzeichnet, dass** ein Regelkreis einen Beobachter (F3) mit einem Modell zumindest eines Teils der zu regelnden Strecke umfasst und Ist-Werte der Regelgröße durch Auswertungen von im Modell auftretenden Signalen ermittelt werden.

9. Verfahren nach einem der vorhergehenden Ansprüche, **dadurch gekennzeichnet, dass** ein Regelkreis einen Beobachter (F4) mit einem idealisierten Modell zumindest eines Teils der zu regelnden Strecke umfasst und Soll-Werte der Regelgröße durch Auswertungen von im Modell auftretenden Signalen ermittelt werden.

10. Verfahren nach Anspruch 8 und 9, **dadurch gekennzeichnet, dass** die Stellgröße für die Kupplung (2) derart in Abhängigkeit der Ist-Werte und der Soll-Werte beeinflusst wird, dass das Verhalten einer Strecke (3) dem des idealisierten Modells (F4) nahe kommt.

11. Vorrichtung zur Regelung einer ersten Regelgröße und einer zweiten Regelgröße in einem Antriebsstrang (1-6) eines Kraftfahrzeugs, wobei für die erste Regelgröße ein erster eigener Regelkreis und für die zweite Regelgröße ein zweiter eigener Regelkreis vorgesehen ist, wobei die Vorrichtung Signalerfassungsmittel und Signalverarbeitungsmittel umfasst, **dadurch gekennzeichnet, dass** der erste Regelkreis einen ersten Regelblock (R1) zum Regeln der ersten Regelgröße und der zweite Regelkreis einen zweiten Regelblock (R2) zum Regeln der zweiten Regelgröße umfasst, wobei die beiden Regelkreise derart eingerichtet sind, dass beide Regelkreise überlagert auf eine Kupplung (2) des Antriebsstrangs wirken und ihr Übertragungsverhalten in Bezug auf die Frequenz jeweils derart unterschiedlich ist, dass sie in voneinander im Wesentlichen getrennten Frequenzbereichen wirken.

12. Vorrichtung nach Anspruch 11, **dadurch gekennzeichnet, dass** die Vorrichtung zur Durchführung eines Verfahrens nach einem der Ansprüche 1 bis 10 eingerichtet ist.

## Claims

1. Method for controlling a first controlled variable and a second controlled variable in a drive train (1-6) of a motor vehicle, a first dedicated control loop being provided for the first controlled variable and a second dedicated control loop being provided for the second controlled variable, **characterized in that** the first control loop comprises a first control block (R1) for controlling the first controlled variable, and the second control loop comprises a second control block (R2) for controlling the second controlled variable, the two control loops being set up in such a way that the two control loops act in a superimposed fashion on a clutch (2) of the drive train and their response characteristic differs respectively with reference to the frequency in such a way that they act in frequency bands that are essentially separated from one another.

2. Method according to Claim 1, **characterized in that** the two control loops are respectively active in one of two frequency bands which differ from one another.

3. Method according to Claim 1 or 2, **characterized in that** the two control variables are variables for controlling the drive train (1-6) of the motor vehicle having an engine (1) and at least one controllable clutch (2) as actuator, and one controlled variable is a measure of rotational speed oscillations of a segment of the drive train on the output side of the clutch (2) and is controlled in such a way that rotational speed oscillations are reduced with the aid of an oscillation control system by control action on the clutch.

4. Method according to one of the preceding claims, **characterized in that** a control loop comprises a control system for guiding the engine speed (n1).

5. Method according to one of the preceding claims, **characterized in that** a control loop comprises a control system for guiding the torque transmitted by the clutch (2).

6. Method according to one of the preceding claims, **characterized in that** the frequency spectrum of signals is bounded in a control loop with the aid of high pass filtering or low pass filtering in order to achieve a response characteristic of the control loops that differs with reference to the frequency.

7. Method according to Claim 6, **characterized in that** a control loop serves to reduce rotational speed oscillations in a segment of the drive train of a motor vehicle on the output side (3) of the clutch (2), and the bounds of the frequency spectrum are set during the determination of a measure of rotational speed oscillations and/or during the production of a control action for the clutch (2).

8. Method according to one of the preceding claims, **characterized in that** a control loop comprises an observer (F3) with a model of at least one part of the system to be controlled, and actual values of the controlled variable are determined by evaluations of signals occurring in the model.

9. Method according to one of the preceding claims, **characterized in that** a control loop comprises an observer (F4) with an idealized model of at least one part of the system to be controlled, and desired values of the controlled variable are determined by evaluations of signals occurring in the model.

10. Method according to Claims 8 and 9, **characterized in that** the manipulated variable for the clutch (2) is influenced in such a way as a function of the actual values and the desired values that the performance of a system (3) approximates that of the idealized model (F4).

11. Device for controlling a first controlled variable and a second controlled variable in a drive train (1-6) of a motor vehicle, a first dedicated control loop being provided for the first controlled variable and a second dedicated control loop being provided for the second controlled variable, the device comprising signal acquisition means and signal processing means, **characterized in that** the first control loop comprises a first control block (R1) for controlling the first controlled variable and the second control loop comprises a second control block (R2) for controlling the second controlled variable, the two control loops being set up in such a way that the two control loops act in a superimposed fashion on a clutch (2) of the drive train and their response characteristic differs respectively with reference to the frequency in such a way that they act in frequency bands that are essentially separated from one another.

12. Device according to Claim 11, **characterized in that** the device is set up to carry out a method according to one of Claims 1 to 10.

## Revendications

1. Procédé pour régler une première valeur de réglage et une deuxième valeur de réglage dans un ensemble de transmission (1-6) d'un véhicule automobile, dans lequel, pour la première valeur de réglage, on prévoit un premier circuit de réglage propre, et pour la deuxième valeur de réglage, on prévoit un deuxième circuit de réglage propre,
**caractérisé en ce que** le premier circuit de réglage comprend un premier bloc de réglage (R1) pour régler la première valeur de réglage et le deuxième circuit de réglage comprend un deuxième bloc de réglage (R2) pour régler la deuxième valeur de réglage, les deux circuits de réglage étant conçus de telle sorte que les deux circuits de réglage superposés agissent sur un embrayage (2) de l'ensemble de transmission et leur comportement de transmission par rapport à la fréquence étant à chaque fois différent, de telle sorte qu'ils agissent dans des plages de fréquence sensiblement séparées les unes des autres.

2. Procédé selon la revendication 1, **caractérisé en ce que** les deux circuits de réglage sont actifs à chaque fois dans une parmi deux plages de fréquences qui se distinguent l'une de l'autre.

3. Procédé selon la revendication 1 ou 2, **caractérisé en ce que** les deux valeurs de réglage sont des valeurs pour la commande de l'ensemble de transmission (1-6) du véhicule automobile avec un moteur (1) et au moins un embrayage commandable (2) en tant qu'actionneur, et une valeur de réglage est une mesure des oscillations de régime d'une portion de l'ensemble de transmission au niveau du côté de la sortie de l'embrayage (2), et est réglée de telle sorte que les oscillations de régime soient réduites au moyen d'une régulation des oscillations par intervention de réglage sur l'embrayage.

4. Procédé selon l'une quelconque des revendications précédentes, **caractérisé en ce qu'**un circuit de réglage comprend une régulation pour commander le régime du moteur (n1).

5. Procédé selon l'une quelconque des revendications précédentes, **caractérisé en ce qu'**un circuit de réglage comprend une régulation pour commander le couple transmis par l'embrayage (2).

6. Procédé selon l'une quelconque des revendications précédentes, **caractérisé en ce que** pour l'obtention d'un comportement de transmission, différent par rapport à la fréquence, des circuits de réglage, le spectre de fréquences de signaux dans un circuit de réglage est limité au moyen d'un filtrage passe-haut ou d'un filtrage passe-bande.

7. Procédé selon la revendication 6, **caractérisé en ce qu'**un circuit de réglage sert à réduire les oscillations de régime dans une portion de l'ensemble de transmission d'un véhicule automobile du côté de la sortie (3) de l'embrayage (2), et la limitation du spectre de fréquences est effectuée lors de la détection d'une mesure des oscillations de régime et/ou lors de la génération d'une intervention de réglage pour l'embrayage (2).

8. Procédé selon l'une quelconque des revendications précédentes, **caractérisé en ce qu'**un circuit de réglage comprend un observateur (F3) avec un modèle d'au moins une partie de la section à régler et des valeurs instantanées des valeurs de réglage sont détectées par des analyses des signaux produits dans le modèle.

9. Procédé selon l'une quelconque des revendications précédentes, **caractérisé en ce qu'**un circuit de réglage comprend un observateur (F4) avec un modèle idéal d'au moins une partie de la section à régler et des valeurs de consigne des valeurs de réglage sont déterminées par analyses de signaux produits dans le modèle.

10. Procédé selon les revendications 8 et 9, **caractérisé en ce que** la valeur de réglage pour l'embrayage (3) est influencée en fonction des valeurs instantanées et des valeurs de consigne de telle sorte que le comportement d'une section (3) s'approche du modèle idéal (F4).

11. Dispositif pour le réglage d'une première valeur de réglage et d'une deuxième valeur de réglage dans un ensemble de transmission (1-6) d'un véhicule automobile, dans lequel, pour la première valeur de réglage, on prévoit un premier circuit de réglage propre, et pour la deuxième valeur de réglage, on prévoit un deuxième circuit de réglage propre, le dispositif comprenant des moyens de détection de signaux et des moyens de traitement des signaux, **caractérisé en ce que** le premier circuit de réglage comprend un premier bloc de réglage (R1) pour régler la première valeur de réglage et le deuxième circuit de réglage comprend un deuxième bloc de réglage (R2) pour régler la deuxième valeur de réglage, les deux circuits de réglage étant conçus de telle sorte que les deux circuits de réglage superposés agissent sur un embrayage (2) de l'ensemble de transmission et leur comportement de transmission par rapport à la fréquence étant à chaque fois différent, de telle sorte qu'ils agissent dans des plages de fréquence sensiblement séparées les unes des autres.

12. Dispositif selon la revendication 11, **caractérisé en ce que** le dispositif est conçu pour mettre en oeuvre un procédé selon l'une quelconque des revendications 1 à 10.
